Europäisches Patentamt

European Patent Office

Office européen des brevets

(19)

(11) Publication number: **0 244 893**

**A1**

(12) **EUROPEAN PATENT APPLICATION**

(21) Application number: 87200646.5

(51) Int. Cl.⁴: **A01K 39/012** , A01K 5/02

(22) Date of filing: 06.04.87

(30) Priority: 18.04.86 IT 1201086

(43) Date of publication of application:
    **11.11.87 Bulletin 87/46**

(84) Designated Contracting States:
    **AT BE CH DE ES FR GB GR LI LU NL SE**

(71) Applicant: Pirovano, Camillo
    Localitá Cavigiolo
    I-22052 Cernusco Lombardone (Como)(IT)

(72) Inventor: Briganti, Giovanni
    Via dell'Appennino, 677
    I-47100 Forli'(IT)

(74) Representative: Martegani, Franco et al
    Ingg. GUZZI e RAVIZZA S.r.l. Via Boccaccio, 24
    I-20123 Milano(IT)

(54) **Improvements in automatic feed dispensing installations for animals and in particular for poultry-feed in battery breeding farms.**

(57) There are claimed improvements consisting, in synthesis, of a movable hopper or feed box, closed on its bottom and conceived in such a way as to allow the passage between the two walls parallel to the sense of progress of the hopper, of a fixed feed-rationing device consisting preferably of a known disc dragging cable on which it is possible, when required, to fit suitable sleeves in order to limit the dispensing of the fodder to only just the amount of ration corresponding to the actual number of animals gravitating on a specific section of the manger (fodder trough).

## fig. 2

## IMPROVEMENTS IN AUTOMATIC FEED DISPENSING INSTALLATIONS FOR ANIMALS AND IN PARTICULAR FOR POULTRY-FEED IN BATTERY BREEDING FARMS

In the battery chicken-breeding farms, the animals are distributed in rows of cages or hen coops provided on their outside with a manger consisting of a trough or canal shaped to meet the characteristics of the automatic food dispenser used.

At present, the automatic dispensing of the fodder is carried out either by gravity or by entrainment.

The drop-by-gravity dispensing avails itself of mobile hoppers with an open bottom, so that when they slide along the manger or trough, they may deposit a more or less thick layer of fodder.

In the entrainment distribution, the hoppers are fixed while the fodder advances in the mangers by means of a screw conveyor or by means of chains.

Alternatively to the chains there may also be used conveyors clables having, at constant spacings or intervals, plastic discs with a radius slightly inferior to that of the flow duct provided at the bottom of the trough.

When effecting the distribution by gravity, the quantity of fodder deposited at each point of the trough is determined, obviously, by the share part passing through the hopper at that point and, thus, it is almost impossible to obtain a uniform distribution on long distribution stretches in as much as it would be absolutely necessary to ensure a constant parallelism between the bottom of the trough or manger and the running guides which, amongst other turn out to suffer strains due to a decreasing load with reference to the distribution effected by the hopper along its progress.

In the distribution or dispensing by entrainment there is a certain uniformity for the quantities distributed, but, on the other hand, there occur serious qualitative unbalances in as much as the entrained fodder suffers an unmixing and the heavier particles tend to deposit themselves first.

A further drawbacks, common to all the known distribution systems (both by gravity as well as by entrainment), is due to the impossibility of maintaining constant the rationing in the case the number of animals is reduced in some of the cages.

In fact, the distribution of the fodder is effective keeping in mind that the whole line to be served is faced by a plurality of cages identical in size to each other and containing each an equal number of animals which dispose in common of the fodder periodically fed into the trough portion facing their cage.

When in a cage, for various reasons, there may be one or more adult animals missing, it is not possible to effect any integration because the alien elements would be overwhelmed and killed by the native group which considers the cage as a territory exclusively of their own that must be defended against outsiders.

Since it is not even possible to adapt the dispensing to the number of animals present in each cage, it optains that some of the animals will enjoy increased rations and this, besides representing a waste, is the cause of conditions of unbalance in a production which, for obvious reasons, must be homogeneous.

All the above listed problems may be solved thanks to the improvements under examination, which propose an automatic dispensing based on the use of a mobile feed-distributing hopper, closer at its bottom and open between its walls parallel to the sense of the translation movement of the hopper itself, so that it may be crossed a fixed rationing device, preferably by one of those disc-fitted conveyor cables already used in the entrainment distribution.

The hopper, advancing along the fixed rationing cable, leaves in the trough a number of rations, each determined by the interval between two consecutive discs. always in proportion to the number of animals present in each cage.

This because, when in one cage the number of animal is reduced, the portioning cable, in the section facing said cage, may be partially neutralized by fitting to it some cylindrical sleeves having a volume equal to that of the rations to be annulled.

These and several other characteristics will be even more understood thanks to the following description and with reference to the four attached drawings wherein, for purely illustrative purposes and in no way limiting purposes, are represented:

-Figure 1 showing a perspective view of a row of cages served by a mobile feeding hopper and by a fixed portioning or rationing cable;

-Figure 2 exemplifying the working of the fixed rationing device as well as illustrating the ways for adapting the distribution to the number of animals present in each cage;

-Figures 3 and 4 showing the possibility of substituting the rationing cable with a series of plastic elements hooked up to one another in succession;

-Figures 5 and 6 respectively showing a front view and the longitudinal cross-section of the feeding hopper as taken in the zone crossed by the fixed rationing cable;

-Figures 7 and 8 showing two versions of the cylindrical sleeve to be applied manually onto the fixed rationing cable, intended to reduce temporarily the number of rations distributed in one predetermined zone of the trough;

-Figure 9 representing transversal cross-section of the hopper already represented in Figures 5 and 6, and having two hinged bulkheads by means of which the distribution of the fodder may be excluded on more or less long stretches of the trough;

-Figure 10 showing two views of the bulkheads of Figure 9;

-Figure 11 showing a transversal cross-section of a hopper similar to the preceding one and provided with a portholed or windowed cylinder to be manually rotated in one or the opposite direction, depending on whether one wishes to suspend or resume the distribution;

-Figure 12 showing two cross-sectional views of said windowed cylinder;

-Figures 13 and 14 showing, respectively, a lateral or side view and the coss-section of a hopper provided with hinged bulkheads whose opening allows to remove manually the rationing cable in correspondence with the zones temporarily excluded from the distribution.

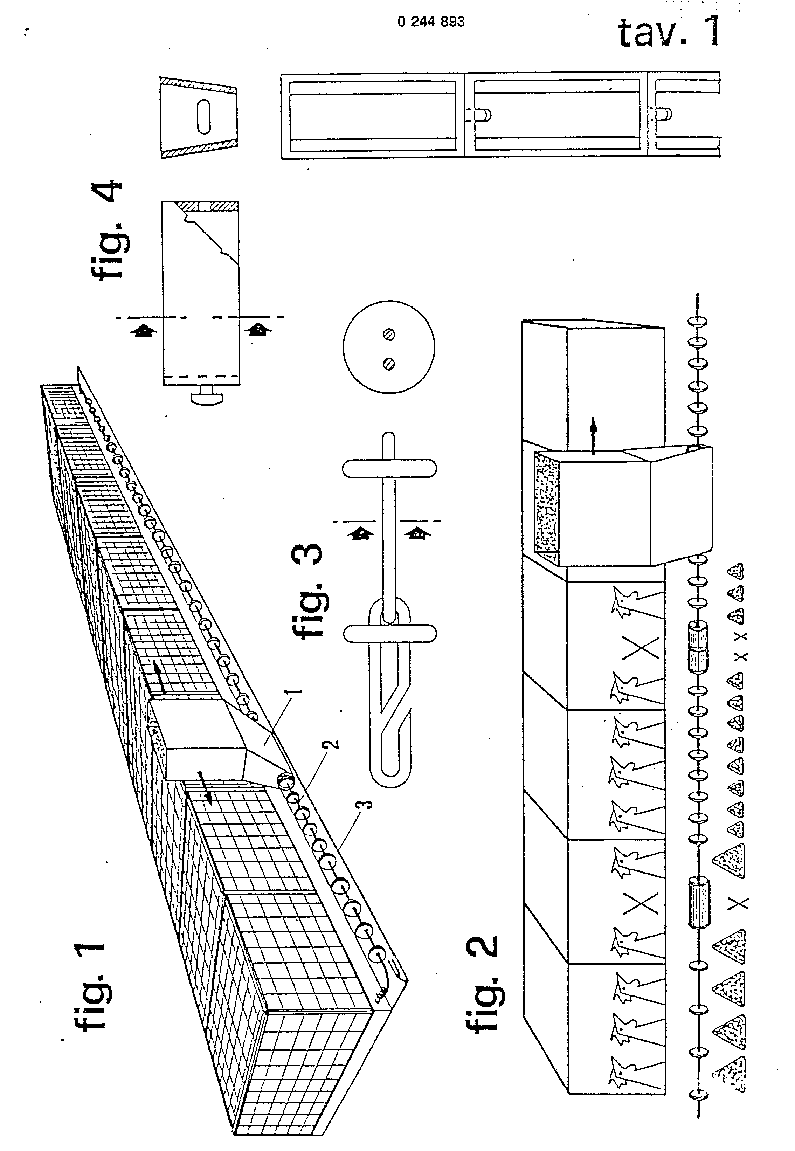

Observing Figure 1, it will be remarked that hopper 1, supported by and gliding on guides just as in traditional automatic gravity distribution installations, is crossed through the two walls perpendicular to the sense of motion of the hopper, by rationing cable 2 which, fixed at the two ends of the manger 3, causes the discharge of constant quantities of fodder.

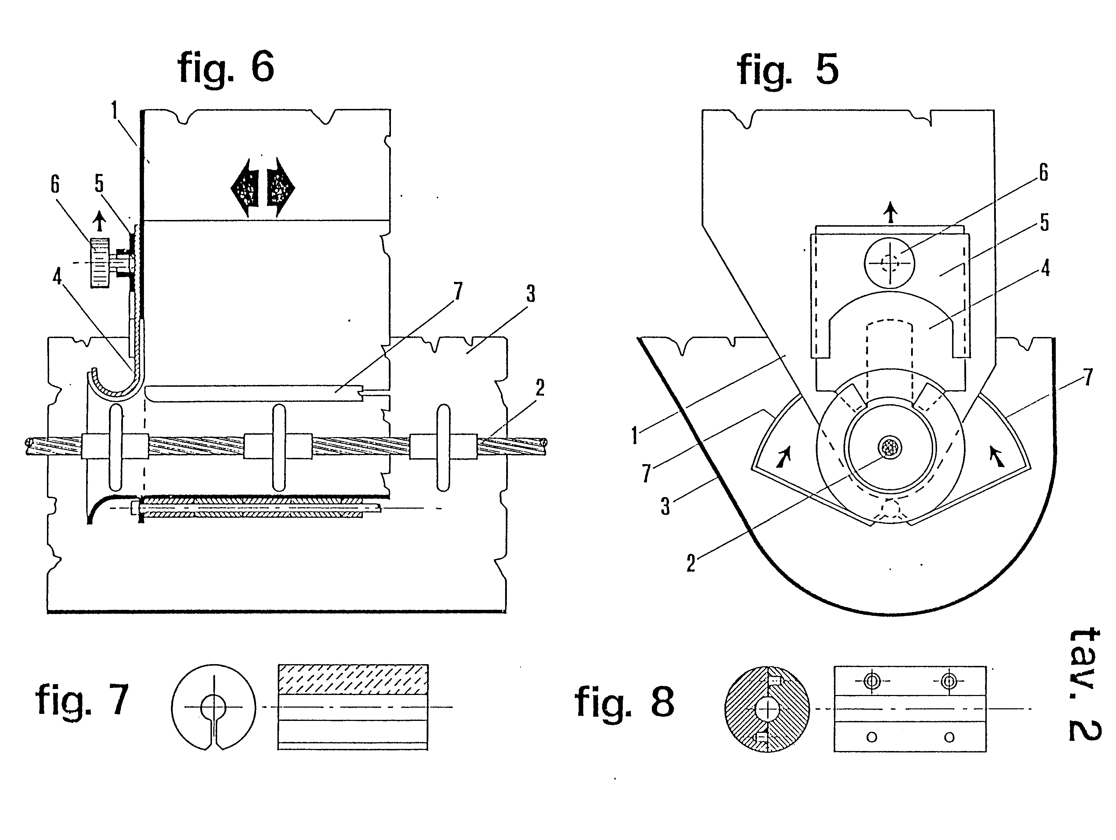

Said rationing cable may consist of the same type of cable already used as a mobile cable in the feeding-by-entrainment installations and which is formed, as shown in Fig. 6, by a steel cable carrying, spaced at constant intervals, a plurality of plastic discs molded directly onto the cable itself. In the same way there may be used a cable which is simply slipped through discs fitted with sleeves to be approached to one another in succession.

In both cases, the intervals between the discs will have to be such as to draw, in front of each case as exemplified in Fig. 2, a number of rations corresponding to the maximum number of animals foreseen or to a multiple of said number.

This, in order to be enabled to intervene at any instant for annulling one or more rations, wherever there occurs a drop in the number of animals, by applying on the rationing cable suitable cylindrical sleeves which, however realized, will exclude from the drawing the stretch of cable comprised between two discs.

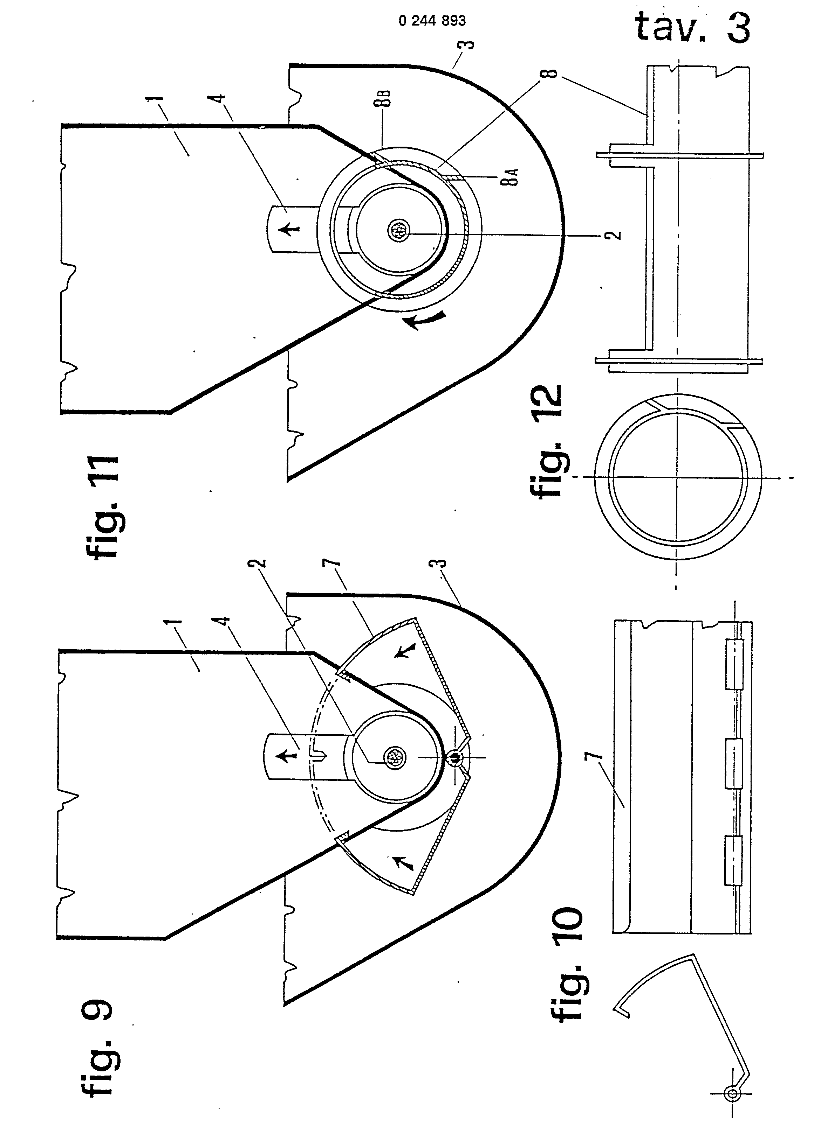

Just for exemplifying purposes, in Figures Nos. 7 and 8 are shown two versions of the sleeve: the first one consisting of an element of rubber or other equivalent elastical material, that will allow its fitting onto the cable by opening it along its longitudinal cut.

The second one being formed by two molded elements provided with teeth and locating holes allowing them to be closed upon the cable.

Even if the disc-carrying rationing cable may represent an optimal solution, this does not exclude that, while still remaining within' the scope of the inventive principle itself, there may be used, still as fixed rationing devices, conveyor chains and other elements suited for effecting the rationed drawing of the fodder during the linear motion of the hopper and on which it be possible to apply, whenever needed, suitable removable elements that will exclude the distribution in specific zones of the manger or trough.

Moreover, the fixed rationing device may also be formed with modular elements to be hooked on in succession like those of Fig. 3 which will carry out the drawing of the rations by means of discs, or like those of Fig. 4 which operate the rationing by means of small bottomless wagons through which the fodder is discharged into the underlying manger.

Observing Figures 5 and 6, it will be remarked that the openings in hopper 1 for its sliding along the rationing disc-carrying cable 2, besides being shaped into an invitation for allowing the to-and-fro motion of the hopper, on their upper part show a notch shielded or screened by bulkhead 4 which, adjustable in height along guide 5 and after loosening pressure-screw 6, allows to vary the volume of the rations to be discharged according to the requirements of the moment.

Further two bulkheads, indicated as 7 and more clearly evidenced in Figures 9 and 10, are hinged underneath the hopper according to an axis parallel to the traverse axis of rationing cable 2.

Said bulkheads, passing through suitable slots in the sides of the hopper, can swivel and meet each other inside the hopper in order to isolate the ration-drawing zone from the overhanging zone, thereby suspending the dispensing of the fodder for longer or shorter stretches of the underlying manger 3.

A similar function may be accomplished by the windowed cylinder 8 of Figures 11 and 12 which passing through the slots pre-arranged on the two sides of the hopper, is rotated either in one or the opposite sense, depending on whether one wishes to suspend or restore the dropping of the fodder into the drawing zone of the rationing cable 2.

The rabbet wings 8A and 8B, reaching against the hopper, respectively show either the fully closed or fully opened position.

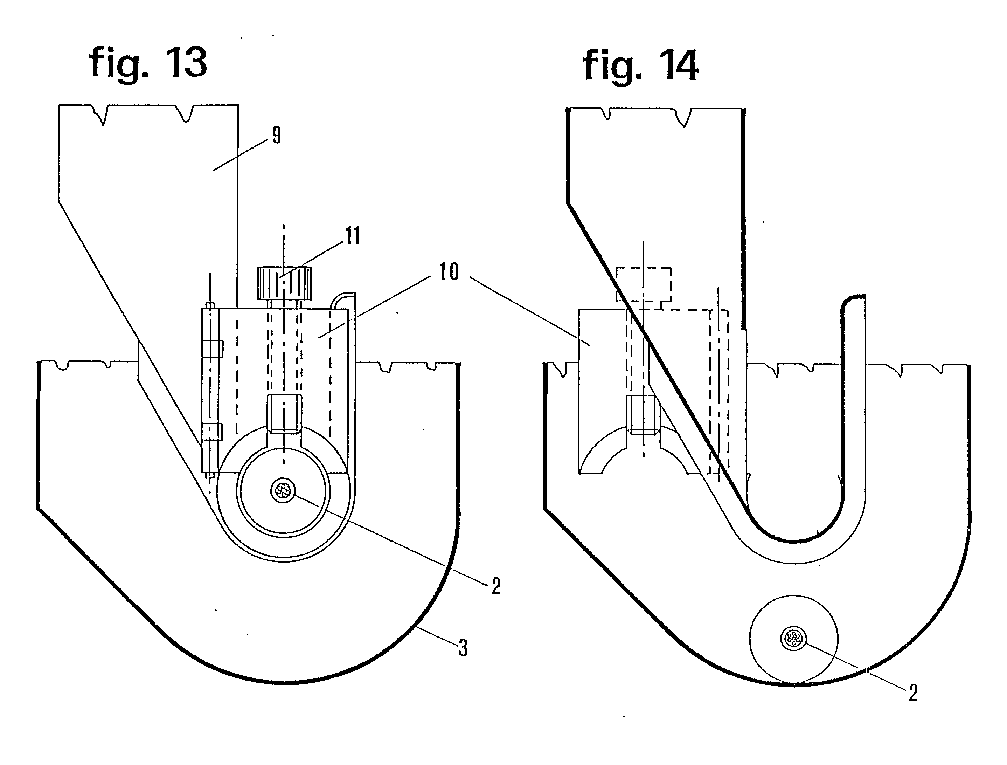

In the version represented in Figures 13 and 14, the fixed rationing cable 2 effects the drawings off of the fodder in a canal communicating with the room of the hopper 9 and closed laterally by vertically hinged hatches 10 fitted with a screw 11 whose vertical adjustment, like a bulkhead, allows to vary the volume of the fodder at the discharge.

Said hatches 10, which open up outwardly and are are constrained in the closed position by springs, exert a double function, i.e.: to allow the temporary removal of the rationing cable 2 (like in Figure 14), in order to suspend the dispensing of the fodder in some of the zones of manger 3; to yield easily in the presence of foreign bodies which, when accidentally reaching the rationing cable, may disturb the movement of the hopper.

Quite obviously, the precedingly represented and described examples are to be taken simply as a demonstration of the practical feasibility of the invention whose patent rights must be understood as covering all feasible and workable variants according to the principle herein above expounded, both for the construction of new feed-dispensing installations as well as for the adaptation of the already existing installations operating by gravity or by entrainment.

## Claims

1) Improvement in installations for the automatic distribution of fodder to animals and, more particularly, to the animals of battery-breeding poultry farms, consisting in the use of a hopper closed at its bottom and so constructed in the two walls vertical to the sense of advancement, as to allow the passage of a rationing element fixed at both ends of the underlying manger, and preferably realized like the disc-entraining cables.

2) Improvements according to claim 1, characterized in that there are used rationing disc-carrying cables or rationing means of any other type suitable for the purpose, inclusive of hose with modular elements as illustrated in Figures 3 and 4, which latter being shaped and dimensioned for drawing, in front of each cage, a number of rations corresponding to the maximum number of animals foreseen or to a multiple of said number, in order to intervene if necessary, in order to limit the distribution or dispensing to only the rations necessary, excluding the others by means of inserts suited for obstructing the drawing off spaces of the fixed rationing device.

3) Improvements according to claim 2, characterized in that for annulling temporarily one or more rations of a rationing disc-cable, there are used suitable cylindrical sleeves as shown in Figures 7 and 8, and, at any rate, suited for being applied by lateral intervention, on the portions of cable delimited by two consecutive discs.

4) Improvements according to the preceding above claims, characterized in that the slots in the hopper for its sliding along the rationing element, besides being shaped with invitations for the to-and-fro motion of the hopper, on the upper part show a notch shielded by a bulkhead or lock-gate adjustable in height in order to be able to vary the volume of the rations on discharge, according to the requirements of the moment.

5) Improvements according to the preceding above claims, characterized in that, in order to suspend the distribution of the fodder on longer or shorter stretches of the manger, it will suffice to isolate the drawing zone of the rationing device from the overhanging room of the hopper.

6) Improvements according to claims 5, characterized by two bulkheads which, like in Figure 9, are hinged at the outside of the hopper so that, when swivelling they may penetrate the hopper through the specially foreseen slots, and meet each other above the rationing element.

7) Improvements according to claim 5, characterized in that a cylinder, windowed as in Figures No. 11 and 12, may be rotated in one or the other sense, depending on whether one wishes to suspend or restore the dropping of the fodder onto the rationing element which effects the drawing.

8) Improvements according to the above preceding claims from 1 to 7, characterized in that the hopper may be shaped like in Figures 13 and 14, and that it presents a lateral canal or duct designed for the rationing element and closed at its opposite ends by hinged openable hatches allowing the removal, whenever required, of the rationing element and thus suspend the distribution of the fodder on longer or shorter stretches of the manger.

9) Improvements according to the above preceding claim 8, characterized in that the hatch, provided with a screw for the adjusting of the volume of the rations at the discharge, is maintained in the closed position by springed means which allow the automatic outward yielding in the presence of foreign bodies which may hinder the translation motion of the hopper with respect to the rationing element.

tav. 1

fig. 4

fig. 3

fig. 2

fig. 1

fig. 6

fig. 5

1

6    5

4

7    3

2

6

5

4

1

7

7

3

2

0 244 893

fig. 7

fig. 8

tav. 2

fig. 9

fig. 11

fig. 10

fig. 12

1

4

2

7

3

1

4

8B

8A

8

3

2

7

0 244 893

tav. 3

# fig. 13

# fig. 14

9

11

10

2

3

10

2

0 244 893

tav. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 751 800 (FINKE) <br> * Pages 3-7; figures 1,2 * | 1,2,4 | A 01 K 39/12 <br> A 01 K 5/02 |
| X | GB-A-1 489 348 (SMITH) <br> * Figures 1-3; page 1, line 58 - page 2, line 40; page 3, lines 47-51 * | 1,4,5 | |
| A | US-A-3 234 912 (ROBINSON) <br> * Figures 1-3; column 3, lines 4-26 * | 4,9 | |

TECHNICAL FIELDS SEARCHED (Int. Cl.4)

A 01 K

The present search report has been drawn up for all claims

| Place of search | Date of completion of the search | Examiner |
|---|---|---|
| THE HAGUE | 01-09-1987 | VILBIG K |